(19) Europäisches Patentamt
European Patent Office
Office européen des brevets

(11) **EP 2 787 652 B1**

(12) **EUROPEAN PATENT SPECIFICATION**

(45) Date of publication and mention
of the grant of the patent:
**01.08.2018 Bulletin 2018/31**

(51) Int Cl.:
*H04J 11/00* *(2006.01)*       *H04B 1/7105* *(2011.01)*
*H04W 88/02* *(2009.01)*

(21) Application number: **13162332.4**

(22) Date of filing: **04.04.2013**

(54) **Blind code allocation detection**

Blindcode-Zuweisungserkennung

Détection d'allocation de code invisible

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.10.2014 Bulletin 2014/41**

(73) Proprietor: **Telefonaktiebolaget LM Ericsson
(publ)
164 83 Stockholm (SE)**

(72) Inventors:
• **Reial, Andres
211 17 Malmö (SE)**
• **Jonsson, Elias
211 29 Malmö (SE)**

(74) Representative: **Ericsson
Patent Development
Torshamnsgatan 21-23
164 80 Stockholm (SE)**

(56) References cited:
**EP-A1- 1 793 518       WO-A1-2006/133631
WO-A2-2011/007334     US-A1- 2002 051 433
US-A1- 2012 069 889**

• **TU Y P ET AL: "Efficient groupwise multiuser
detection with iterative soft interference
cancellation for multi-rate MC-CDMA",
COMPUTER COMMUNICATIONS, ELSEVIER
SCIENCE PUBLISHERS BV, AMSTERDAM, NL,
vol. 32, no. 3, 25 February 2009 (2009-02-25),
pages 482-491, XP025911747, ISSN: 0140-3664,
DOI: 10.1016/J.COMCOM.2008.09.009 [retrieved
on 2008-09-13]**

**Description**

**TECHNICAL FIELD**

Embodiments presented herein relate to blind code detection, and particularly to methods for blind code allocation detection performed in a user equipment, a corresponding user equipment, computer program, and computer program product.

**BACKGROUND**

In cellular communication networks, there is always a challenge to obtain good performance and capacity for a given communications protocol, its parameters and the physical environment in which the cellular communication network is deployed.

In cellular communication networks a wireless device (for example a user equipment) establishes a communications link to a network node (for example an evolved Node B) of a cell. Transmissions from other network nodes in other cells of the cellular communication network may by the wireless device be perceived as interference. Interference is in the wireless device mitigated by having a receiver arranged to perform interference cancellation (IC). In traditional receivers performing IC of transmissions from network nodes in other cells, it is necessary for the receiver to have access to configuration information of the interfering network node(s)' transmission signal(s) in order for the receiver to perform demodulation, decoding, and regeneration.

In general, this information could be obtained by accessing the interfering network node(s)' control channels or by receiving assistance information from the cellular communication network. In High-Speed Downlink Packet Access (HSDPA), network assistance is not available. Thus a receiver performing IC may attempt eavesdropping the associated High Speed-Shared Control Channel (HS-SCCH) to obtain the Modulation and Coding Scheme (MCS) information.

In some cases, information provided by such a control channel may not be available. Further, decoding may not be possible due to the lack of, for example, transport format information. In such or similar cases, the receiver may be configured to perform a simpler from of IC, where the demodulated symbols are immediately used to regenerate soft symbol estimates to be used for IC. Since decoding is omitted in this approach, it is referred to as pre-decoding IC.

While pre-decoding IC does not require transport format information, modulation-related parameters are still necessary for demodulation. The modulation-related parameters must be detected from the data signal received by the wireless device. In particular, modulation format information is indispensable to configure the demodulation and to estimate the associated signal parameters, e.g. signal scaling and noise power/ symbol signal to interference and noise ratio (SINR). In so-called multi-antenna configurations, rank and pre-coding parameters may also be required.

In general terms, code allocation information may not be necessary for pre-decoding IC since cancellation may be applied on a per-code basis. Such a scenario would thus require blind transmission format detection. The performance of blind transmission format detection (as well as subsequent parameter estimation) may be improved if the sample size is increased by including all codes scheduled to the given interfering network node. Code allocation information may also be useful for reducing the complexity of blind detection of the identity of the wireless terminal.

Blind modulation transmission format detection approaches may not provide reliable results at low symbol SINR operating points, typical for IC of transmissions from other cells. For example, classical modulation detection approaches return a decision indicating the highest available modulation order, regardless of the actual transmitted format.

WO 2006/133631 A1 relates to handoff where a joint detection process is performed based on pilot channel estimation codes of the home cell and various neighboring cells, thus resulting in a multi-cell channel estimation process.

US 20120069889 A1 discloses that interference is estimated in an Orthogonal Frequency Division Multiplexing system by receiving at a wireless receiver pilot symbols and data symbols transmitted in time and frequency via resource blocks, detecting a first one of the data symbols transmitted to the wireless receiver via a time-frequency resource element of a first one of the resource blocks and identifying a second one of the resource blocks adjacent the first resource block having related interference parameters. The interference is estimated based on the pilot symbols transmitted via the first resource block and the pilot symbols transmitted via the second resource block.

WO/2011/007334 A2 discloses that demodulation and interference parameter estimation of an OFDM receiver is improved by identifying regions, in a two-dimensional array of time-frequency transmission positions, having related interference parameters, such as resulting from the same pre-coding scheme, transmission rank, transmitting antennas, and the like. An interference measure is estimated for each of a plurality of time-frequency positions. The interference measures are analyzed by considering them as pixels, or picture elements, in a two-dimensional image, and applying image processing algorithm to identify the regions having related interference parameters. The image processing algorithms may include operations such as edge detection, segmentation, and or clustering. The receiver may perform interference suppression or cancellation such as interference rejection combining of data extracted from signals received within an identified time-frequency region having related interference parameters.

Hence, there is still a need for improved and robust blind code allocation and transmission format detection.

## SUMMARY

The invention is set out in the appended set of claims. The embodiments and/or examples of the following description which are not covered by the appended claims are considered as not being part of the present invention.

An object of embodiments herein is to provide improved and robust blind code allocation and transmission format detection.

The inventors of the enclosed embodiments have realized that the reliability and quality of modulation detection and other transmission format detection, as well as the reliability and quality of subsequent parameter estimation, is limited by the available sample size. In HSDPA per-code processing, it is limited to 480 symbols per estimation instance. The inventors of the enclosed embodiments have therefore realized that if the sample size could be increased, the detection performance as well as the estimation performance could be improved. The inventors of the enclosed embodiments have further realized that one approach for code allocation detection by attempting to detect power differences between adjacent codes is not expected to provide robust results at low SINR.

A particular object is therefore to provide improved and robust blind code allocation and transmission format detection suitable for HSDPA as well as for long-term evolution (LTE) compliant cellular communication networks. According to a first aspect there is presented a method for blind code allocation detection. The method is performed in a user equipment. The method comprises receiving a downlink interference signal, the downlink interference signal comprising at least two transmission resource units. The method comprises forming metric vectors for the at least two transmission resource units based on symbol estimates in the transmission resource units. The method comprises detecting groups of jointly scheduled transmission resource units based on the metric vectors.

Advantageously the method enables robust blind detection of code allocation (in HSDPA) as well as robust blind detection of resource block allocation (in LTE). This may facilitate subsequent detection of the transmission format elements, e.g. modulation. The information provided by the method may be used e.g. for setting up demodulation in a pre-decoding IC receiver or for providing assistance information to a blind UE ID detection algorithm in a post-decoding IC receiver.

According to embodiments the method comprises detecting transmission format parameters for the groups of jointly scheduled transmission resource units based on the symbol estimates in the groups of jointly scheduled transmission resource units. Advantageously this enables combined blind code allocation and transmission format parameter detection. The metric vectors may comprise initial estimates of transmission format parameters. According to embodiments detecting transmission format parameters is performed only when the initial estimates do not fulfil a quality criterion.

According to a second aspect there is presented a user equipment for blind code allocation and transmission format detection. The user equipment comprises a receiver. The receiver is arranged to receive a downlink interference signal, the downlink interference signal comprising at least two transmission resource units. The user equipment comprises a processing unit arranged to form metric vectors for the at least two transmission resource units based on symbol estimates in the transmission resource units. The processing unit is further arranged to detect groups of jointly scheduled transmission resource units based on the metric vectors.

According to a third aspect there is presented a computer program for blind code allocation detection, the computer program comprising computer program code which, when run on a user equipment, causes the user equipment to perform a method according to the first aspect.

According to a fourth aspect there is presented a computer program product comprising a computer program according to the third aspect and a computer readable means on which the computer program is stored. The computer readable means may be non-volatile computer readable means.

It is to be noted that any feature of the first, second, third and fourth aspects may be applied to any other aspect, wherever appropriate. Likewise, any advantage of the first aspect may equally apply to the second, third, and/ or fourth aspect, respectively, and vice versa. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

## BRIEF DESCRIPTION OF THE DRAWINGS

The invention is now described, by way of example, with reference to the accompanying drawings, in which:

Fig 1 is a schematic diagram illustrating a cellular communication network where embodiments presented herein may be applied;

Fig 2 is a schematic diagram showing functional modules of a user equipment;

Fig 3 shows one example of a computer program product comprising computer readable means;

Figs 4 and 5 are flowcharts of methods according to embodiments; and

Figs 6 and 7 schematically illustrate I/Q diagrams.

## DETAILED DESCRIPTION

The inventive concept will now be described more fully hereinafter with reference to the accompanying drawings, in which certain embodiments of the invention are shown. This inventive concept may, however, be embodied in many different forms and should not be construed as limited to the embodiments set forth herein; rather, these embodiments are provided by way of example so that this disclosure will be thorough and complete. Like numbers refer to like elements throughout the description.

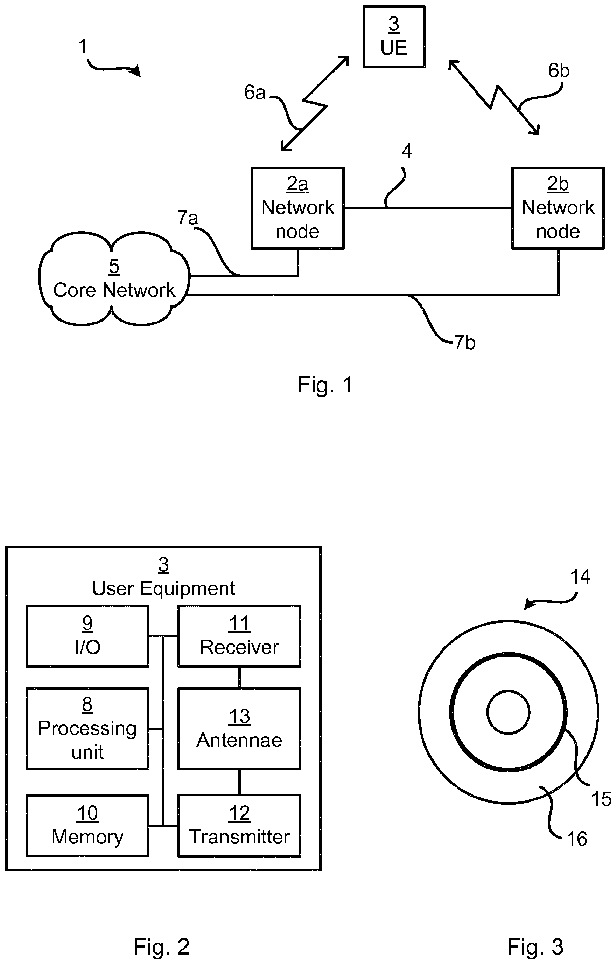

Fig 1 is a schematic diagram illustrating a cellular communication network 1 where embodiments presented herein can be applied. The cellular communications network 1 comprises network nodes 2a, 2b and a wireless device, hereinafter referred to as a user equipment (UE) 3. The network nodes 2a, 2b are base stations to which the UE 3 is arranged to establish a wireless communications link 6a, 6b, in order to access content and services provided by a core network 5. The network nodes 2a, 2b may represent eNodeBs (E-UTRAN NodeB, also known as Evolved NodeB). eNodeBs are typically connected to each other via the so-called X2 interface (as illustrated by reference numeral 4), and they connect to the core network 5 via the so-called S1 interface (as illustrated by reference numerals 7a and 7b). The UE 3 may represent a mobile terminal, a user terminal, a user agent, etc. The cellular communication network 1 may generally comply with any one or a combination of W-CDMA (Wideband Code Division Multiplex), LTE (Long Term Evolution), EDGE (Enhanced Data Rates for GSM Evolution, Enhanced GPRS (General Packet Radio Service)), CDMA2000 (Code Division Multiple Access 2000), etc., as long as the principles described hereinafter are applicable. Typically the cellular communication network 1 is arranged such that each network node 2a, 2b serves the UE 3 on a per cell basis. Once the UE 3 has established a wireless communications link 6a to one network node 2a, signals transmitted from another network node 2b as received by the UE 3 on another wireless communications link 6b may be regarded as interference.

For HSDPA, a new transport layer channel, High-Speed Downlink Shared Channel (HS-DSCH), has been added to UMTS release 5 and further specification. It is implemented by introducing three new physical layer channels: HS-SCCH, HS-DPCCH and HS-PDSCH. The High Speed-Shared Control Channel (HS-SCCH) informs the UE 3 that data will be sent on the HS-DSCH, 2 slots ahead. The Uplink High Speed-Dedicated Physical Control Channel (HS-DPCCH) carries acknowledgment information and current channel quality indicator (CQI) of the UE 3. This value is then used by the network node 2a, 2b to calculate how much data to send to the UE 3 on the next transmission. The High Speed-Physical Downlink Shared Channel (HS-PDSCH) is the channel mapped to the above HS-DSCH transport channel that carries actual user data. The embodiments disclosed herein relate to blind code allocation detection; for example to code allocation detection in HSDPA without access to the HS-SCCH information. In general terms in order to perform pre-decoding IC in HSDPA without access to the HS-SCCH information, transmission format (modulation format, multi-antenna configuration, etc.) information and preferably the HS-PDSCH code allocation to a given user equipment must be detected directly from the received data channel. The herein disclosed embodiments provide a robust approach for performing such detection. Particularly, in order to obtain blind code allocation detection there is provided a UE 3, a method performed in the UE 3, a computer program 15 comprising code, for example in the form of a computer program product 14, that when run on the UE 3, causes the UE 3 to perform the method.

Fig 2 schematically illustrates, in terms of a number of functional modules, the components of a UE 3. A processing unit 8 is provided using any combination of one or more of a suitable central processing unit (CPU), multiprocessor, microcontroller, digital signal processor (DSP), application specific integrated circuit (ASIC) etc., capable of executing software instructions stored in a computer program product 14 (as in Fig 3), e.g. in the form of a memory 10. Thus the processing unit 8 is thereby arranged to execute methods as herein disclosed. The memory 10 may also comprise persistent storage, which, for example, can be any single one or combination of magnetic memory, optical memory, solid state memory or even remotely mounted memory. The UE 3 may further comprise an input/ output (I/O) interface 9 for receiving and providing information to a user interface. The UE 3 also comprises one or more transmitters 12 and receivers 11, comprising analogue and digital components forming the functionalities of a transmitter and a receiver, and a suitable number of antennae 13 for radio communication with the network nodes 2a, 2b. The processing unit 8 controls the general operation of the UE 3, e.g. by sending control signals to the I/O interface 9, the memory 10, the transmitter 12 and/or the receiver 11 and receiving reports and information from the I/O interface 9, the memory 10, the transmitter 12 and/or the receiver 11 of its operation. Other components, as well as the related functionality, of the UE 3 are omitted in order not to obscure the concepts presented herein.

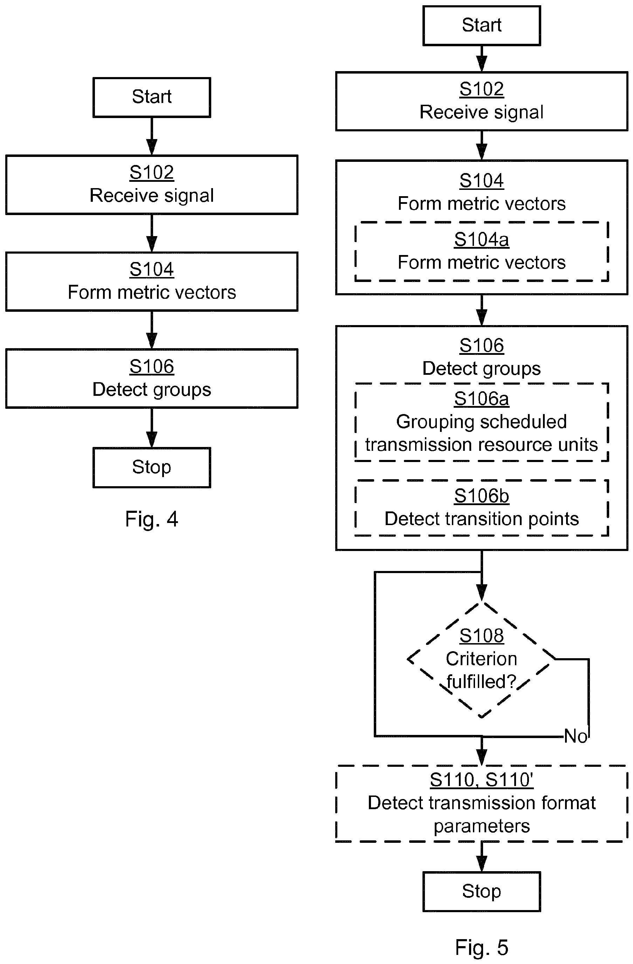

Figs 4 and 5 are flow charts illustrating embodiments of methods for blind code allocation detection. The methods are performed in the UE 3. The methods are advantageously provided as computer programs 15. Fig 3 shows one example of a computer program product 14 comprising computer readable means 16. On this computer readable means 16, a computer program 15 can be stored, which computer program 15 can cause the processing unit 8 and thereto operatively coupled entities and devices, such as the memory 10, the I/O interface 9, the transmitter 12, the receiver 11 and/or the antennae 13 to execute methods according to embodiments described herein. In the example of Fig 3, the computer program product 14 is illustrated as an optical disc, such as a CD (compact disc) or a DVD (digital versatile disc) or a Blu-Ray disc. The computer program product could also be embodied as a memory (RAM, ROM, EPROM, EEPROM) and more particularly as a non-volatile storage medium of a device in an external memory such as a USB (Universal Serial Bus) memory. Particularly, the computer program 15 may be stored in the memory 10 of the UE 3 and thereby enable the UE 3 to perform methods as herein described. Thus, while the computer program 15 is here schematically shown as a track on the depicted optical disk, the computer program 15 can be stored in any way which is suitable for the computer program product 14.

Returning now to Fig 1, a method for blind code allocation detection comprises, in a step S102, receiving a downlink interference signal. The downlink interference signal is received by the receiver 11 of the UE 3. The downlink interference signal comprises at least two transmission resource units. The transmission resource unit may be a HS-PDSCH code in HSDPA (i.e., a High-Speed Downlink Packet Access High Speed-Physical Downlink Shared Channel code). Alternatively the transmission resource unit may be a resource block (RB) in LTE (Long-Term Evolution). As noted above, in Fig 1, signals transmitted by the network node 2b on the wireless communications link 6b may by the UE 3 be regarded as interference (assuming that the UE 3 has an established wireless communications link 6a with the network node 2a).

*Code metrics*

Next, metrics are determined on a per-code basis. Particularly, the processing unit 8 of the UE 3 is arranged to, in a step S104, form metric vectors for the at least two transmission resource units based on symbol estimates in the transmission resource units.

In general terms, for each code $k$, at least one metric values $q_l^{(k)}$ may be determined to form a metric vector $\mathbf{q}^{(k)}$ with elements $l = 1...L$, based on the symbol estimates $s_k(i)$ from that code. Further, in general terms, the choice of the metric values $q_l^{(k)}$ may be implementation-specific. According to some embodiments, associated with the set of metric vectors $\mathbf{q}^{(k)}$ may be a common weighting vector $\mathbf{w}$ that provides reliability and/or importance information for the

$$w_l = \frac{a_l}{\sigma_l^2}$$

individual metric values. The weighting elements may be formed as where $\sigma_l^2$ is the current estimation error variance for metric value $l$ and $a_l$ is a pre-determined constant, based on and defined at the time of metric design. That is, according to an embodiment the processing unit 8 is arranged to, in an optional sub-step S104a, form the symbol estimates by combining individual per-antenna and/ or per-delay symbol estimates after frequency transformation (for example by applying a Fast Fourier Transform, FFT in LTE) or despreading (in HSDPA) of the transmission resource units. This would enable improved and accurate forming of the symbol estimates.

The metric values may represent at least one of the following: initial estimates of signal power (or other moments), initial estimates of "unitless" statistical metrics (e.g. excess kurtosis, histogram, and/or probability density function), initial modulation estimates, initial rank or precoding estimates, per-dimension magnitude or power histogram bins, etc. That is, according to embodiments the metric vectors are indicative of at least one of received signal power, initial modulation, signal distribution, and estimates of higher-order statistics of the symbol estimates. Also according to embodiments the transmission format itself may be indicative of at least one of modulation, rank, and pre-coding of the received downlink interference signal. As the skilled person understands, each of these parameters has its advantages.

According to some embodiments, several types of metric values are mixed to obtain a robust "signature" for the individual codes via the metric vector(s). Different types of metric values may be useful for discriminating the individual code properties. The metric vector(s) may therefore contain metric values which are sensitive to different operating points and conditions. However, each metric vector as a whole need not provide useful information for the following demodulation, as long as one or more of its dimensions provide a "signature" discrimination function. That is, according to an embodiment the UE 3 is arranged to, in an optional sub-step, form the metric vectors such that at least one of its dimensions provide a signature discrimination function for each individual transmission resource unit of the at least two transmission resource units.

According to some embodiments, denoising of the metric values may be applied to improve the metric vector quality.

*Code groupings detection*

Next, code groupings are detected. Particularly, the processing unit 8 of the UE 3 is arranged to, in a step S106, detect groups of jointly scheduled transmission resource units based on the metric vectors. In general terms, the metric vectors for the codes belonging to the same UE 3 should be "similar" (as determined e.g. by a distance criterion, such as Hamming distance, Euclidean distance, etc.), while the vectors describing codes to different UEs should not be "similar", due to the differences in power allocation and modulation as well as other transmission format settings. Consider now HSDPA. In general terms, the HS-DSCH downlink channel is shared between UEs using channel-dependent scheduling to make the best use of available radio conditions. Each UE continually transmits an indication of the downlink signal quality. Using this information from all UEs operatively connected to the network node, the network node decides which UEs will be sent data in the next frame and how much data should be sent for each UE. The allocation is in units of channelisation codes for Spreading Factor 16 (SF16), of which 16 exist and up to 15 can be allocated to the HS-DSCH. Therefore, since the HS-PDSCH code allocation for a given UE is contiguous, and the scheduler typically attempts to allocate the individual UEs next to each other in the SF16 code space, the metric vectors should exhibit a discernible difference (according to some measure) at the code transition point, where the code allocation for one UE ends and another begins. That is, according to an embodiment the processing unit 8 is arranged to, in an optional sub-step S106a, group scheduled transmission resource units that belong to the same UE 3 by detecting transition points for transmission resource unit allocation where contiguous allocation for one UE ends and contiguous allocation for a next UE begins.

According to some embodiments, the code transition point may be detected by observing a "1-D" metric vector sequence. In some of such embodiments, for each adjacent code pair $k$ and $k - 1$, the difference measure may be defined e.g. as $d_{k,k-1} = \mathbf{w}^T |\mathbf{q}^{(k)} - \mathbf{q}^{(k-1)}|$. According to such embodiments detection of transition points thus basically amounts to detecting large changes in the metric vector: the transition point at code $k$ is detected if the difference measure exceeds a threshold, $d_{k,k-1} > \tau$. The threshold may be predetermined or based on the values of $d_{k,k-1}$ for all values of $k$ (min, max, mean, etc.). Instead of a linear (e.g. Euclidean) distance measure, other measures could be used, such as, but not limited to: squared distance, metric vector correlation $c_{k,k-1} = |(\mathbf{W}\mathbf{q}^{(k)})^H (\mathbf{W}\mathbf{q}^{(k-1)})|$ (where $\mathbf{W}$ is a diagonal matrix with diagonal elements $w_l$), and other related constructions.

According to other embodiments, the code transition point may be detected by analyzing "2-D" characteristics of the metric vector relationships. In some of such embodiments, a metric vector distance matrix $\mathbf{D}$ is formed with elements $d_{k,n} = \mathbf{w}^T |\mathbf{q}^{(k)} - \mathbf{q}^{(n)}|$ for all possible SF16 codes used for HS-PDSCH: $k = 2...16$, $n = 2...16$. The resulting matrix has block diagonal sections with low values and off-diagonal sections with higher values. However, even the distance properties between different code allocations are consistent for a given code allocation pair. In general terms the edge detection operation maybe performed over entire rows (or columns) in the matrix $\mathbf{D}$ to obtain more robust results,

$$\delta_{k,k-1} = \sum_{n=2}^{16} \left| d_{k,n} - d_{k-1,n} \right|.$$

As above, the transition point at code $k$ is detected if the difference measure exceeds a threshold, $\delta_{k,k-1} > \tau$. Again, other distance measures could be used. (If correlation measures would be used to form the matrix, as shown above, the block diagonal sections would contain larger entries.)

That is, the processing unit 8 may be arranged to, in an optional sub-step S106b, detect the transition points for transmission resource unit allocation based on 1-dimensional (1-D) or 2-dimensional (2-D) edge detection, wherein the edge detection is applied as at least one of a difference measure, a distance measure, or a correlation measure between the metric vectors.

According to yet other embodiments, 1-D or 2-D hypothesis testing may be used instead of edge detection to identify groups of codes, the minimized aggregate intra-group metric differences and maximizing inter-group differences.

The detected code allocation transition points are then used to define the contiguous per-user code groups.

*Transmission format parameter detection*

Next, transmission format parameters maybe detected. The per-used code groups are subsequently used to perform blind modulation detection, and possibly detection of other transmission format parameters. Particularly, the processing unit 8 of the UE 3 may be arranged to, in an optional step S110, detect transmission format parameters for the groups of jointly scheduled transmission resource units. The detection is based on the symbol estimates in the groups of jointly scheduled transmission resource units. Some non-limiting approaches to modulation detection are provided below with reference to Scenario 1. The herein disclosed blind detection quality is improved over per-code detection, due to a larger sample size. In a typical scheduling pattern, when 14 codes are scheduled to a given UE, the sample size is increased by more than an order of magnitude.

The metric vectors may comprise initial estimates of transmission format parameters. If such initial modulation estimates are included in the per-code metric vector, and if they are deemed sufficiently reliable, e.g. when operation at high SINR, the step S110 of re-detecting modulation may be omitted. That is, according to embodiments the initial estimates of transmission format parameters are, in an option sub-step S108, and by the processing unit 8, compared to a quality criterion. The processing unit 8 may then be arranged to, in an optional sub-step S110', only detect the transmission format parameters for the groups of jointly scheduled transmission resource units based on the symbol estimates in the groups of jointly scheduled transmission resource units when the initial estimates do not fulfil the quality criterion. The grouping information may further be used for robust demodulation parameter estimation (e.g. constellation scaling and/or symbol SINR).

Two non-limiting scenarios where the above disclosed embodiments may be readily applied will be disclosed next. However, as the skilled person understands, these are just two of many scenarios where the above disclosed embodiments may be readily applied. Unless otherwise stated, each step of each scenario is performed by the processing unit 8. The steps may be defined and implemented as computer program portions. Thus, also the subject matter defined by the below disclosed first and/or second scenario may be enclosed in the above recited computer program 15 and computer program product 14 and be accessed and executed by the processing unit 8.

Scenario 1

In this scenario only the combined symbols for each of the spreading factor 16 codes 1 to 15 from an interfering cell are used as input. Further, this scenario is based on the interfering cell using all or a sub-set of these codes for HS-PDSCH transmission. If only a sub-set of the 15 codes are used, the remaining codes are assumed to be empty. This approach is robust even if codes not used for HS-PDSCH are used for other purposes, such as a DPCH transmission. This scenario is further based on that in a HS-PDSCH transmission the modulation and power is the same for all codes transmitted to a given UE.

For a HS-PDSCH, and transmitted on channelization code $k$, the average amplitude over a Transmission Time Interval (TTI) of combiner output symbols is determined as

$$d^{(k)}(n_{TTI}) = \frac{1}{3 \times 160} \sum_{i=0}^{479} \left( | \operatorname{Re} s_k(i) | + | \operatorname{Im} s_k(i) | \right) \qquad (1)$$

Here, the index $i$ is enumerating the symbols in time, $n_{TTI}$ is the TTI number, and $s_k(i)$ is the Combiner output for code $k$ and symbol index $i$ in the TTI.

As noted above, combined symbols for HS-PDSCH codes 1 to 15 from an interfering cell is used as input. As output is produced the codes of the same power and a suggested common modulation is output for each group of codes. The maximum number of UEs being simultaneously addressed in a TTI is used as a parameter.

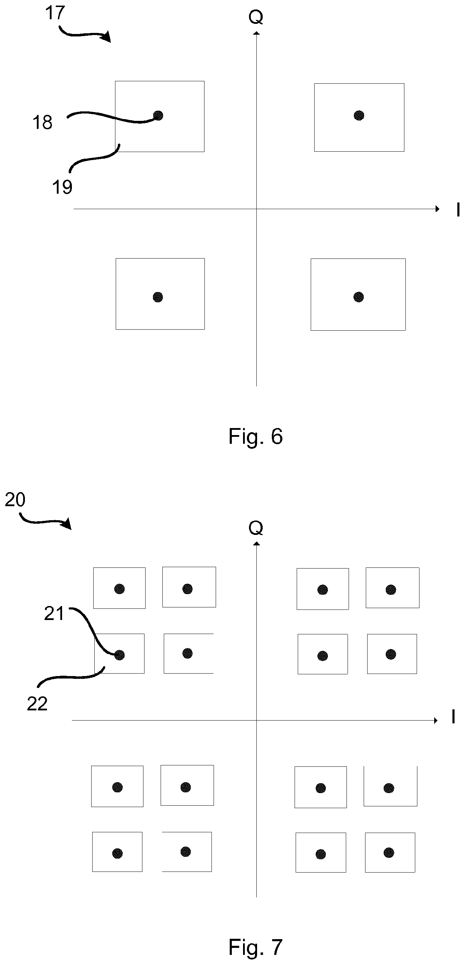

Step 1.1 involves coarse metric calculation for the likelihood that a given modulation has been used. First the amplitude is estimated, for example, using equation (1) of the real or imaginary part of the combined symbols for a given code. This is used to locate where the constellation points are in the I/Q (in-phase and quadrature) diagram. Figs 6 and 7 schematically illustrate two example of I/Q diagrams 17, 20; Fig 6 is an I/Q diagram 17 for quadrature phase shift keying, QPSK, (or 4 quadrature amplitude modulation, 4-QAM) and Fig 7 is an I/Q diagram 20 for 16-QAM. In Figs 6 and 7 the black circles denote constellation points 18, 21. Areas 19, 22 in which each constellation point is a midpoint are then defined. In Figs 6 and 7 these areas are illustrated as rectangles. However, as the skilled person understands, the areas may be circular shaped, diamond shaped, etc. The total area of the defined area is the same for no modulation (i.e., empty code), QPSK, 16-QAM, and 64-QAM. The areas can be divided into groups, where each group contains 4 sub-areas. For no modulation, empty code, only one group with one element exists; for QPSK only one group exists; there are 4 groups for 16-QAM; and 16 groups for 64-QAM. Each element in a group overlaps in the same manner constellation points for a constellation not given by the one constellation point the group belongs to. That is, the same symmetry is found between elements in a group and how they overlap with constellation points for all modulation formats.

For a given modulation, mod = 0,1,2,3 (no transmission, QPSK, 16-QAM, 64-QAM) let $\mu_{\mathrm{mod},g}^{(k)}$ be the ratio of elements belonging to group *g*. If the assumed constellation agrees with the transmitted constellation, all the $\mu_{\text{mod},g}^{(k)}$ should be of the same size. Also denote by $\mu_{\text{mod},outside}^{(k)}$ the ratio of points not belonging to any area. The size of $\mu_{\text{mod},outside}^{(k)}$ will depend on the amount of noise, but will be smaller for the case the assumed modulation agrees with the transmitted modulation.

The composite metric for the modulation are then defined as $\mu_{\text{mod}}^{(k)}$, where mod = 0,1,2,3, as:

$$\mu_{\text{mod}}^{(k)} = \gamma_1 \sum_{\vee g_1 \neq g_2} \left( \mu_{\text{mod},g_1}^{(k)} - \mu_{\text{mod},g_2}^{(k)} \right)^2 + \gamma_2 \cdot \mu_{\text{mod},outside}^{(k)}$$

Here, the parameters $\gamma_1$ and $\gamma_2$ are weighting factures which may be used to put more or less emphasis on the first term or the second term. Typically, $\gamma_1$ and $\gamma_2$ are of equal weight.

The size of the areas could depend on the measured signal to noise ratio (SNR). In general terms, the areas increase with the noise level. This provides improved discrimination power from the ratio between elements inside and outside the areas.

Step 1.2 involves denoising of the metric values by denoising the amplitude estimates $d^{(k)}(n_{TTI})$ and the modulation metrics $\mu_{\text{mod}}^{(k)}$. Hereinafter the TTI index will be omitted, since it is of no importance to the algorithm under consideration. Denoising is accomplished by finding $\tilde{d}^{(k)}$ which minimizes

$$\alpha_1 \sum_{k=2}^{15} \left| \tilde{d}^{(k)} - \tilde{d}^{(k-1)} \right| + \alpha_2 \sum_{k=1}^{15} \left| \tilde{d}^{(k)} - d^{(k)} \right|^2 \qquad (2)$$

and by finding $\tilde{\mu}_{\text{mod}}^{(k)}$ which minimizes

$$\alpha_3 \sum_{k=2}^{15} \left| \tilde{\mu}_{\text{mod}}^{(k)} - \tilde{\mu}_{\text{mod}}^{(k-1)} \right| + \alpha_4 \sum_{k=1}^{15} \left| \tilde{\mu}_{\text{mod}}^{(k)} - \mu_{\text{mod}}^{(k)} \right|^2 \qquad (3)$$

Here, $\alpha_i$ are constants to be tuned. One reason for using the L1 norm in the first term, the regularization term, is that by using the L1 norm edges are preserved. That is, a drop from a high value from one code to the next is preserved. With an L2 norm in the regularization term there may be unnecessary smoothing of the edges.

Here, $\alpha_2$ and $\alpha_4$ can be set to one, i.e., $\alpha_2 = \alpha_4 = 1$. The values of $\alpha_1$ and $\alpha_3$ may then be found by tuning. Typically the values of $\alpha_1$ and $\alpha_3$ would be of the order of 0.0 1-0.1 and could depend on the signal to noise ratio. There are many ways to solve for $\tilde{d}^{(k)}$ in equation (2). One way is to approximate the L1 one norm with $\sqrt{\left| \ \right|^2 + \varepsilon}$ for some small $\varepsilon$. This makes the expression (2) differentiable and $\tilde{d}^{(k)}$ can be solved for by differentiating and setting the derivative to zero, followed by a fix-point method when solving for the zero (in order to find the minimum).

Step 1.3 involves edge detector. Points/codes with *k* are found such that

$$\left| \tilde{d}^{(k)} - \tilde{d}^{(k-1)} \right| > \tau_1 \cdot \max_{i \in [1,15]} \left( \left| \tilde{d}^{(i)} \right| \right) \text{ and } \max \left( \tilde{d}^{(k)}, \tilde{d}^{(k-1)} \right) \geq \tau_3 \qquad (4)$$

or

$$\left| \tilde{\mu}_{\text{mod}}^{(k)} - \tilde{\mu}_{\text{mod}}^{(k-1)} \right| > \tau_2 \cdot \max_{i \in [1,15]} \left( \left| \mu_{\text{mod}}^{(i)} \right| \right) \text{ and } \max \left( \tilde{\mu}_{\text{mod}}^{(k)}, \tilde{\mu}_{\text{mod}}^{(k-1)} \right) \leq \tau_4 \qquad (5)$$

In equations (4) above, the last factor in the RHS ($\max_{i \in [1,15]}(|\tilde{d}^{(i)}|)$ or $\max_{i \in [1,15]}\left(\left|\mu_{\mathrm{mod}}^{(i)}\right|\right)$ ) is present to normalize the selection of points. By means of the second inequality in equations (4) and (5) recording points/codes where both codes involved are either unused or the wrong modulation hypotheses is assumed is avoided. Triggering on noise is thereby avoided.

One purpose of equation (4) or (5) is to identify possible edges, that is, changes in transmit power or modulation. Changes in transmit power could occur because different UEs are addressed or because of empty codes.

Here, $\tau_i$ are tuned to strike a balance between detecting true edges and avoiding false detections. The higher the $\tau_i$ values the less number of edges will be found. It is a possible outcome that no edges are found. Here, $\tau_1$ and $\tau_2$ are typically of the order of 0.2-0.5 and $\tau_3$ of the order of 0.1 and $\tau_4$ of the order of 0.1, assuming the UE receiver 11 is arranged to normalize the incoming signal to a value of one. For a more elaborate tuning the $\tau_i$ values could depend on the signal to noise ratio, SNR.

Equation (4) produces a set of codes where the transmit power changes from one code to the next and equation (5) produces a set of codes for each modulation hypothesis where the modulation changes from one code to the next. At this stage the transmit power changes are said to be well defined.

Step 1.4 involves modulation selection fine tuning. Denote by the set *J* all codes (edges) selected by the modulation criteria, that is, equation (4) above, which indicates a possible change of modulation across codes. Now select all combinations of $0,...,N_{edge}$ points from the set *J*. Here, the value of $N_{edge}$ depends on the assumed maximum number of simultaneously transmitting UEs, for example, if at most one UE is assumed, $N_{edge}$ equals to 2; if at most two UEs are assumed $N_{edge}$ equals 4. That is, $N_{edge}$ equals twice the assumed number of maximum simultaneously transmitting UEs per TTI. For each such set of points, intervals $I_n$, $n = 1,...,N$ whose endpoints coincide with a given subset of *J* are defined. In each interval the modulation is selected as the one that minimizes $\overline{\mu}_{\mathrm{mod}}^{(n)}$, that is, the average of the $\tilde{\mu}_{\mathrm{mod}}^{(k)}$ within the interval $I_n$ for the modulation given by mod .

Next, the metric of equation (6) is evaluated:

$$\sum_{n=1}^{N} \overline{\mu}_{\mathrm{mod}}^{(n)} \qquad\qquad (6)$$

The metric of equation (6) is evaluated for all sets of at most $N_{edge}$ points and the final selection of points where the modulation changes and its corresponding modulation in each interval is given by the combination that minimizes the metric in equation (6).

By letting the metric vector $\mathbf{q}^{(k)}$ be defined as $\mathbf{q}^{(k)} = \left(d^{(k)}, \mu_{\mathrm{mod}}^{(k)}\right),$ Step 1.1 of the present scenario thus corresponds to step 104. Further, Steps 1.2 and 1.3 thereby correspond to step 106, and Step 1.4 corresponds to step S110. Hence, the subject matter of Steps 1.1-1.4 may be readily combined and integrated with the above.

Scenario 2

Step 2.1 involves scaling all codes with a common scale factor. The common scale factor may be chosen so that the code with the highest power is normalized to unit power.

Step 2.2 involves estimating statistics of the codes. For each code k=1 to 15, two sub-steps are performed. Firstly, the QAM symbols are separated into real and imaginary Pulse Amplitude Modulation (PAM) components. Secondly, the PDF (as represented by a histogram) is estimated of all PAM symbols over a fixed support (denoted by $\mathbf{q}^{(k)}$, a column vector).

Step 2.3 involves determining correlation coefficients of the histograms for each code pair {k,n}:

9

$$c_{k,n} = \frac{\mathbf{q}^{(k)^T}\mathbf{q}^{(n)}}{\sqrt{\mathbf{q}^{(k)^T}\mathbf{q}^{(k)}\mathbf{q}^{(n)^T}\mathbf{q}^{(n)}}} = \frac{\sum_{l=1}^{L}q_l^{(k)}q_l^{(n)}}{\sqrt{\left(\sum_{l=1}^{L}q_l^{(k)}q_l^{(k)}\right)\left(\sum_{l=1}^{L}q_l^{(n)}q_l^{(n)}\right)}},$$

where $q_l^{(k)}$ is the histogram count for code $k$ and bin $l$. The expression for $c_{k,n}$ includes normalization of correlation values to the range [0, .., 1].

Alternatively, the normalized difference between the histograms may be used. Thus, $c_{k,n}$ may be determined according to:

$$c_{k,n} = \frac{\sum_{l=1}^{N}\left|q_l^{(k)} - q_l^{(n)}\right|}{\sum_{l=1}^{N}q_l^{(k)}}$$

Step 2.4 involves code group detection and comprises detecting one or more block-diagonal sub-matrices in a matrix C, built from the terms $c_{k,n}$. Detecting the block boundaries may be accomplished using per-row edge detection. The code transition metric for each row is determined as

$$\delta_{k,k-1} = \sum_{n=2}^{N+1}\left|c_{k,n} - c_{k-1,n}\right|, N = 15$$

and for rows where the metric exceeds a threshold, $\delta_{k,k-1} > \tau$, where $\tau$ is determined experimentally for different received signal SINR values, a code group boundary is detected.

An alternative way of detecting code group boundary is to first denoise the correlation values per column (as in Step 1.2 above), then proceeding through the rows starting from the first diagonal element of the denoised C matrix so as to detect the first edge as in equation (4) above, then proceeding to the diagonal element pointed by the row where the first edge was detected, then proceeding further through the rows until a further edge is detected, and so on.

At high SINR, typically all matrix entries in diagonal blocks (with same power and modulation across the codes) have values equal to one and all the rest of the matrix entries in C would be close to zero. At low SINRs, intermediate values will also occur, but the diagonal blocks still have the largest magnitude, with values close to one.

Once the groups are known, modulation and other transmission parameters are detected for each group, using symbols from all codes in a given group. Such detection is as such known in the art and further elaboration regarding the same is therefore omitted.

In summary, according to the inventive concept presented herein, code allocation (and optionally also transmission format) is detected blindly using a sequence of operations. For example, the inventive concept presented herein enables interference cancellation in HSDPA as well as in LTE without access to HS-SCCH (in HSDPA) or RB (in LTE) information, and without decoding of the received data channel, as defined by the received downlink interference signal. For each data code, a metric vector is formulated, based on its symbol estimates. The metric vectors may reflect one or more of received signal power, initial modulation and other transmission format estimates, signal distribution (e.g. magnitude histogram, PDF, "unit-less" higher-order statistics such as kurtosis), etc. The metric vectors constitute (soft) "signatures" for the different codes, without requiring explicit decisions about their signal structure. Code grouping is detected, based on analyzing relationships between the per-code metric vectors. The relationships may be formulated in terms of differences, Euclidean or squared distances, or correlations between the different per-code metric vectors. Since the code allocation groups are contiguous, edge detection principles maybe used to detect transitions from one code group to the next. Edge detection may be applied in 1-D (metric relationships between adjacent codes) or in 2-D (metric relationships between all code pairs). Symbols from the entire detected code group(s) may be used to estimate transmission format settings (e.g. modulation, rank, and pre-coding), utilizing the full per-user sample set. The grouping information may further be used to make the demodulation parameter estimation (e.g. constellation scaling and/or symbol SINR) more robust.

The inventive concept has mainly been described above with reference to a few embodiments. However, as is readily appreciated by a person skilled in the art, other embodiments than the ones disclosed above are equally possible within the scope of the appended patent claims. For example, although the inventive concept in some embodiments has been described in terms of forming and operating on metric vectors containing all "signature" information, alternative but essentially equivalent embodiments exist where the different metric values are handled (reformulated in terms of vector operations) one by one in the code group boundary process.

Further, the inventive concept may be readily applied in a multiple input multiple output (MIMO) reception/transmission context. One difference is that for MIMO more metrics need to be evaluated. For example, with reference to Scenario 1, Steps 1.1 to 1.4 generally need to be performed for each input stream and for each hypothesis of the rank. Since the pre-coder used is unknown, all pre-coders need to be considered for each rank. The pre-coder hypothesis giving the smallest value in equation (6) is the one assumed is being transmitted from the interfering cell.

Further, although the inventive concept mainly has been described in the context of HSDPA, similar blind modulation and symbol grouping detection problems arise in e.g. LTE, where several resource blocks may carry data for the same user and thus share similar modulation parameters. As noted above, for an LTE context the codes are in the above embodiments and scenarios replaced with resource blocks, *mutatis mutandis.*

## Claims

1. A method for blind resource unit allocation detection, the method being performed in a user equipment (3), comprising the steps of:

   receiving (S102) a downlink interference signal over at least two transmission resource units;
   forming (S104) metric vectors for the at least two transmission resource units based on symbol estimates of the downlink interference signal in the transmission resource units, wherein for each of said at least two resource units a metric vector comprising a plurality of metric values is determined, wherein each metric value corresponds to a different metric and is determined based on symbol estimates of the downlink interference signal in said resource unit;
   detecting (S106) groups of scheduled transmission resource units based on the metric vectors, such that transmission resource units having similar metric vectors belong to the same group, wherein the plurality of metrics are indicative of at least two of: received signal power, modulation, rank, precoding, magnitude histogram, probability distribution function, higher-order statistics of the symbol estimates, wherein the transmission resource unit is a High-Speed Downlink Packet Access, HSDPA, High Speed-Physical Downlink Shared Channel, HS-PDSCH, code or a Long-Term Evolution, LTE, resource block, RB.

2. The method according to claim 1, further comprising:
   detecting (S110) transmission format parameters for the groups of scheduled transmission resource units, wherein for each of the groups, transmission format parameters are determined, wherein each transport format parameter is determined based on the symbol estimates of the downlink interference signal in said group of scheduled transmission resource units.

3. The method according to claim 1, wherein said metric vectors comprise initial estimates of transmission format parameters, the method further comprising:

   comparing (S108) the initial estimates of transmission format parameters to a quality criterion; and
   only when said initial estimates do not fulfil said quality criterion, detecting (S110') transmission format parameters for the groups of scheduled transmission resource units, wherein for each of the groups, transmission format parameters are determined, wherein each transport format parameter is determined based on the symbol estimates of the downlink interference signal in said group of scheduled transmission resource units.

4. The method according to any one of the preceding claims, further comprising:
   forming (S104a) said symbol estimates by combining individual per-antenna and/ or per-delay symbol estimates after frequency transformation or dispreading of the transmission resource units.

5. The method according to any one of the preceding claims, wherein detecting the groups comprises:
   detecting transition points for transmission resource unit allocation where contiguous allocation for one user equipment ends and contiguous allocation for a next user equipment begins, such that transmission resource units within a group are scheduled for a common user equipment.

**6.** The method according to claim 5, wherein detecting the transition points for transmission resource unit allocation comprises:

detecting (S106b) said transition points for transmission resource unit allocation based on 1-dimensional or 2-dimensional edge detection, wherein the edge detection is applied as at least one of a difference measure, a distance measure, or a correlation measure between the metric vectors.

**7.** A user equipment (3) for blind resource unit allocation and transmission format detection, comprising a receiver (11) and a processing unit (8) arranged to perform the method steps of any of claims 1 to 6.

**8.** A computer program (15) for blind resource unit allocation, the computer program comprising computer program code which, when run on a user equipment (3), causes the user equipment to perform the method steps of any of claims 1 to 6.

**Patentansprüche**

**1.** Verfahren zur Blinderkennung von Ressourceneinheitszuweisung, wobei das Verfahren in einer Benutzereinrichtung (3) durchgeführt wird und die folgenden Schritte umfasst:

Empfangen (S102) eines Downlink-Störsignals über mindestens zwei Senderessourceneinheiten;
Bilden (S104) metrischer Vektoren für die mindestens zwei Senderessourceneinheiten basierend auf Symbolschätzungen des Downlink-Störsignals in den Senderessourceneinheiten, wobei für jede der mindestens zwei Ressourceneinheiten ein metrischer Vektor bestimmt wird, der eine Mehrzahl von metrischen Werten umfasst, wobei jeder metrische Wert einer anderen Metrik entspricht und basierend auf Symbolschätzungen des Downlink-Störsignals in der Ressourceneinheit bestimmt wird;
Erkennen (S106) von Gruppen disponierter Senderessourceneinheiten basierend auf den metrischen Vektoren, derart dass Senderessourceneinheiten mit ähnlichen metrischen Vektoren zur gleichen Gruppe gehören, wobei die Mehrzahl von Metriken mindestens zwei anzeigt von: Empfangssignalleistung, Modulation, Rang, Vorcodierung, Größenhistogramm, Wahrscheinlichkeitsverteilungsfunktion, Statistiken höherer Ordnung der Symbolschätzungen, wobei die Senderessourceneinheit ein Hochgeschwindigkeits-Downlink-Paketzugriff, HSDPA,-HS-PDSCH (gemeinsamer physikalischer Hochgeschwindigkeits-Downlink-Kanal)-Code oder ein LTE (Long-Term Evolution)-Ressourcenblock, RB, ist.

**2.** Verfahren nach Anspruch 1, ferner umfassend:
Erkennen (S110) von Sendeformatparametern für die Gruppen disponierter Senderessourceneinheiten, wobei für jede der Gruppen Sendeformatparameter bestimmt werden, wobei jeder Sendeformatparameter basierend auf den Symbolschätzungen des Downlink-Störsignals in der Gruppe disponierter Senderessourceneinheiten bestimmt wird.

**3.** Verfahren nach Anspruch 1, wobei die metrischen Vektoren Anfangsschätzungen von Sendeformatparametern umfassen, und das Verfahren ferner umfasst:

Vergleichen (S108) der Anfangsschätzungen von Sendeformatparametern mit einem Qualitätskriterium; und
Erkennen (S110') von Sendeformatparametern für die Gruppen disponierter Senderessourceneinheiten nur, wenn die Anfangsschätzungen das Qualitätskriterium nicht erfüllen, wobei für jede der Gruppen Sendeformatparameter bestimmt werden, wobei jeder Sendeformatparameter basierend auf den Symbolschätzungen des Downlink-Störsignals in der Gruppe disponierter Senderessourceneinheiten bestimmt wird.

**4.** Verfahren nach einem der vorhergehenden Ansprüche, ferner umfassend:
Bilden (S104a) der Symbolschätzungen durch Kombinieren einzelner Pro-Antenne- und/oder Pro-Verzögerung-Symbolschätzungen nach einer Frequenzumwandlung oder Entspreizung der Senderessourceneinheiten.

**5.** Verfahren nach einem der vorhergehenden Ansprüche, wobei das Erkennen der Gruppen umfasst:
Erkennen von Übergangspunkten zur Senderessourceneinheitszuweisung, an welchen zusammenhängende Zuweisung für eine Benutzereinrichtung endet und zusammenhängende Zuweisung für eine nächste Benutzereinrichtung beginnt, derart dass Senderessourceneinheiten innerhalb einer Gruppe für eine gemeinsame Benutzereinrichtung disponiert werden.

**6.** Verfahren nach Anspruch 5, wobei das Erkennen der Übergangspunkte zur Senderessourceneinheitszuweisung umfasst:
Erkennen (S106b) der Übergangspunkte zur Senderessourceneinheitszuweisung basierend auf eindimensionaler oder zweidimensionaler Kantenerkennung, wobei die Kantenerkennung als mindestens eines von einem Differenzmaß, einem Abstandsmaß oder einem Korrelationsmaß zwischen den metrischen Vektoren angewendet wird.

7. Benutzereinrichtung (3) zur Blinderkennung von Ressourceneinheitszuweisung und Sendeformat, umfassend einen Empfänger (11) und eine Verarbeitungseinheit (8), die zum Ausführen der Verfahrensschritte nach einem der Ansprüche 1 bis 6 ausgelegt ist.

8. Computerprogramm (15) zur Blindressourceneinheitszuweisung, wobei
das Computerprogramm Computerprogrammcode umfasst, der bei Ausführung auf einer Benutzereinrichtung (3) die Benutzereinrichtung zum Ausführen der Verfahrensschritte nach einem der Ansprüche 1 bis 6 veranlasst.


**Revendications**

1. Procédé de détection d'allocation d'unité de ressource invisible, le procédé étant effectué dans un équipement d'utilisateur (3), comprenant les étapes de :

   la réception (S102) d'un signal d'interférence de liaison descendante sur au moins deux unités de ressources de transmission ;
   la formation (S104) de vecteurs de métriques pour les au moins deux unités de ressources de transmission sur la base d'estimations de symboles du signal d'interférence de liaison descendante dans les unités de ressources de transmission, dans lequel, pour chacune desdites au moins deux unités de ressources, un vecteur de métrique comprenant une pluralité de valeurs de métriques est déterminé, dans lequel chaque valeur de métrique correspond à une métrique différente et est déterminée sur la base d'estimations de symboles du signal d'interférence de liaison descendante dans ladite unité de ressource ;
   la détection (S106) de groupes d'unités de ressources de transmission programmées sur la base des vecteurs de métriques, de sorte que des unités de ressources de transmission ayant des vecteurs de métriques similaires appartiennent au même groupe, dans lequel la pluralité de métriques sont indicatives d'au moins deux de : une puissance de signal reçu, une modulation, un rang, un précodage, un histogramme de grandeur, une fonction de répartition de probabilités, des statistiques d'ordre supérieur des estimations de symboles, dans lequel l'unité de ressource de transmission est un accès de paquets de liaison descendante à grande vitesse, HSDPA, un code de canal partagé de liaison descendante physique à grande vitesse, HS-PDSCH, ou un bloc de ressources, RB, d'évolution à long terme, LTE.

2. Procédé selon la revendication 1, comprenant en outre :
   la détection (S110) de paramètres de format de transmission pour les groupes d'unités de ressources de transmission programmées, dans lequel, pour chacun des groupes, des paramètres de format de transmission sont déterminés, dans lequel chaque paramètre de format de transport est déterminé sur la base des estimations de symboles du signal d'interférence de liaison descendante dans ledit groupe d'unités de ressources de transmission programmées.

3. Procédé selon la revendication 1, dans lequel lesdits vecteurs de métriques comprennent des estimations initiales de paramètres de format de transmission, le procédé comprenant en outre :

   la comparaison (S108) des estimations initiales de paramètres de format de transmission à un critère de qualité ; et
   uniquement lorsque lesdites estimations initiales ne remplissent pas ledit critère de qualité, la détection (S110') de paramètres de format de transmission pour les groupes d'unités de ressources de transmission programmées, dans lequel, pour chacun des groupes, des paramètres de format de transmission sont déterminés, dans lequel chaque paramètre de format de transport est déterminé sur la base des estimations de symboles du signal d'interférence de liaison descendante dans ledit groupe d'unités de ressources de transmission programmées.

4. Procédé selon l'une quelconque des revendications précédentes, comprenant en outre :
   la formation (S104a) desdites estimations de symboles par la combinaison d'estimations de symboles individuelles par antenne et/ou par retard après une transformation ou un désétalement de fréquence des unités de ressources de transmission.

5. Procédé selon l'une quelconque des revendications précédentes, dans lequel la détection des groupes comprend :
la détection de points de transition pour une allocation d'unité de ressource de transmission où une allocation contiguë pour un équipement d'utilisateur se termine et une allocation contiguë pour un équipement d'utilisateur suivant commence, de sorte que des unités de ressources de transmission à l'intérieur d'un groupe soient programmées pour un équipement d'utilisateur commun.

6. Procédé selon la revendication 5, dans lequel la détection des points de transition pour une allocation d'unité de ressource de transmission comprend :
la détection (S106b) desdits points de transition pour une allocation d'unité de ressource de transmission sur la base d'une détection de bord unidimensionnel ou bidimensionnel, dans lequel la détection de bord est appliquée en tant qu'au moins l'une d'une mesure de différence, d'une mesure de distance ou d'une mesure de corrélation entre les vecteurs de métriques.

7. Equipement d'utilisateur (3) pour une allocation d'unité de ressource invisible et une détection de format de transmission, comprenant un récepteur (11) et une unité de traitement (8) agencés pour effectuer les étapes de procédé selon l'une quelconque des revendications 1 à 6.

8. Programme informatique (15) pour une allocation d'unité de ressource invisible, le programme informatique comprenant un code de programme informatique qui, lorsqu'il est exécuté sur un équipement d'utilisateur (3), amène l'équipement d'utilisateur à effectuer les étapes de procédé selon l'une quelconque des revendications 1 à 6.

1

6a

3
UE

6b

4

2a
Network
node

2b
Network
node

7a

5
Core Network

7b

Fig. 1

3
User Equipment

9
I/O

11
Receiver

8
Processing
unit

13
Antennae

10
Memory

12
Transmitter

Fig. 2

14

15

16

Fig. 3

```
        ┌─────────────┐
        │    Start    │
        └─────────────┘
               │
               ▼
 ┌───────────────────────────┐
 │           S102            │
 │      Receive signal       │
 └───────────────────────────┘
               │
               ▼
 ┌───────────────────────────┐
 │           S104            │
 │     Form metric vectors   │
 └───────────────────────────┘
               │
               ▼
 ┌───────────────────────────┐
 │           S106            │
 │      Detect groups        │
 └───────────────────────────┘
               │
               ▼
        ┌─────────────┐
        │    Stop     │
        └─────────────┘
```

Fig. 4

```
                    ┌─────────────┐
                    │    Start    │
                    └─────────────┘
                           │
                           ▼
 ┌─────────────────────────────────────────┐
 │                 S102                     │
 │            Receive signal                │
 └─────────────────────────────────────────┘
                           │
                           ▼
 ┌─────────────────────────────────────────┐
 │                 S104                     │
 │            Form metric vectors           │
 │  ┌ ─ ─ ─ ─ ─ ─ ─ ─ ─ ─ ─ ─ ─ ─ ─ ─ ┐    │
 │              S104a                       │
 │  │       Form metric vectors       │    │
 │  └ ─ ─ ─ ─ ─ ─ ─ ─ ─ ─ ─ ─ ─ ─ ─ ─ ┘    │
 └─────────────────────────────────────────┘
                           │
                           ▼
 ┌─────────────────────────────────────────┐
 │                 S106                     │
 │            Detect groups                 │
 │  ┌ ─ ─ ─ ─ ─ ─ ─ ─ ─ ─ ─ ─ ─ ─ ─ ─ ┐    │
 │              S106a                       │
 │  │      Grouping scheduled          │    │
 │       transmission resource units        │
 │  └ ─ ─ ─ ─ ─ ─ ─ ─ ─ ─ ─ ─ ─ ─ ─ ─ ┘    │
 │  ┌ ─ ─ ─ ─ ─ ─ ─ ─ ─ ─ ─ ─ ─ ─ ─ ─ ┐    │
 │              S106b                       │
 │  │     Detect transition points    │    │
 │  └ ─ ─ ─ ─ ─ ─ ─ ─ ─ ─ ─ ─ ─ ─ ─ ─ ┘    │
 └─────────────────────────────────────────┘
                           │
                           ▼
               ◇ S108 Criterion fulfilled? ◇──── No
                           │
                           ▼
 ┌ ─ ─ ─ ─ ─ ─ ─ ─ ─ ─ ─ ─ ─ ─ ─ ─ ─ ─ ─ ─ ┐
             S110, S110'
 │     Detect transmission format           │
              parameters
 └ ─ ─ ─ ─ ─ ─ ─ ─ ─ ─ ─ ─ ─ ─ ─ ─ ─ ─ ─ ─ ┘
                           │
                           ▼
                    ┌─────────────┐
                    │    Stop     │
                    └─────────────┘
```

Fig. 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006133631 A1
- US 20120069889 A1
- WO 2011007334 A2